# EUROPEAN PATENT APPLICATION

(11) **EP 0 665 398 A1**
(43) Date of publication of application: **02.08.1995**
(21) Application number: 95300532.9
(22) Date of filing: 27.01.1995
(51) Int. Cl.: F16L 21/02, F16L 21/03

(54) **Pipe joint**

(30) Priority: 28.01.1994 GB 9401664; 23.01.1995 GB 9501264
(71) Applicant: BIWATER INDUSTRIES LIMITED, Chesterfield, Derbyshire S45 9NG (GB)
(72) Inventor: Bateman, Terence, deceased (GB); Passley, Gerald Arthur, Darley Dale Derbyshire DE4 2TU (GB); Polkinghorne, Nicholas Charles, Chesterfield Derbyshire S42 5XD (GB)
(74) Representative: W.P. THOMPSON & CO.

(57) **Abstract**

The pipe joint is for pipes to be used in "no-dig" pipe laying operations. The inner and outer surfaces of the pipe are without surface discontinuities across the assembled joint. The spigot and socket parts of the joint have surfaces 110, 120 for transmission of longitudinal thrust during pipe-jacking. A sealing gasket 103 has a sealing portion 131, 132 which is operative between confronting cylindrical surfaces 112, 122 of the spigot and socket parts in the assembled joint and a flange portion 130 which is trapped between the shoulders 110, 120 during assembly and thus holds the gasket in place. In another joint (Figure 1) the seal is by an O-ring 3 acting between confronting concave surfaces 12, 22.

## Description

The present invention relates to pipe joints for use in joining pipes in "no-dig" pipe-laying operations.

It has recently become important to devise new methods of pipe-laying which avoid digging of continuous trenches extending the full length of the pipeline to be laid. This is desirable in most situations but is a particularly important consideration in environmentally-sensitive areas and at locations, for example under airport runways, railway embankments and buildings, where disturbance of normal commercial or industrial activity is prohibited.

One such method which has gained popularity in recent years is "micro-tunnelling and pipe jacking". In this method, shafts are dug at appropriate predetermined intervals along the line where the pipeline is to be laid. A tunnelling machine is lowered into each shaft and digs ahead towards the next shaft. A first section of pipe is next "jacked" into the tunnel excavated by the tunnelling machine. A further section of pipe is then engaged at its leading end with the first section and, when jacked in the tunnel, pushes the first section further along the tunnel. The operation is repeated until the first section reaches the next shaft.

Pipes which have been used in this method include concrete pipes, welded steel pipes, PVC pipes, ceramic pipe and clay pipes. The choice of material is influenced by factors such as the bore of the tunnel and the use to which the final pipeline is to be put. The use of spheroidal graphite iron pipes has however not found popularity because of high costs and difficulties in forming suitable joints between pipe lengths. The present invention aims to overcome this problem by providing a pipe joint which is suitable for ductile or spheroidal graphite iron pipes and for their use in micro-tunnelling and pipe jacking methods.

The pipe joints which the present invention provides are suitable for a wide variety of pipe materials, including centrifugally and statically cast metals, extruded metals, welded metals, ceramics, clays, concrete and polymer-based material. The invention is therefore not limited to pipes of specific materials.

According to the invention, there is provided a pipe joint comprising a socket part, a spigot part receivable in the socket part to produce an assembled joint and means for forming a seal between the socket and spigot parts in the assembled joint, the spigot and the socket each being formed within the wall thickness of respective pipes, whereby the outer and inner pipe walls provide substantially continuous outer and inner surfaces across the assembled joint.

Inner and outer surface discontinuities across the assembled joint are thereby avoided.

Advantageously, the inner and outer cross-sections of the pipes are substantially constant across the assembled joint.

Preferably, each joint part has an abutment surface, the abutment surface of the socket part making direct or indirect contact with the abutment surface of the spigot part in the assembled joint in a way which allows longitudinal thrust to be transmitted from one pipe to the other.

Each abutment surface more preferably takes the form of a continuous shoulder extending around the respective pipe. Each shoulder is conveniently perpendicular to the longitudinal axis of the respective pipe.

Advantageously, each pipe has first and second abutment surfaces which are spaced longitudinally of the pipe.

In such an arrangement, the sealing means is preferably operative between portions of the pipes lying between the respective first and second abutment surfaces.

In another arrangement, each pipe has a single abutment surface which lies outwardly of the sealing means. This helps to prevent damage to the inner surfaces of the pipes during assembly, particularly when the inner surfaces are coated, for example epoxy-coated.

In the arrangements just mentioned or any other, the sealing means is advantageously operative between opposed or confronting concave surfaces of the spigot and the socket parts. In another arrangement the surfaces are cylindrical and preferably coaxial with each other. In any arrangement, the surfaces preferably extend continuously around the spigot and socket parts, respectively.

The sealing means may take any suitable form. The sealing means is preferably placed under compression by longitudinal thrust transmitted across the pipe joint from one pipe to the other.

A convenient form of sealing means is a resiliently compressible O-ring.

Preferably however the sealing means comprises a gasket having a portion for engagement between the spigot and socket parts during assembly of the joint, in order to hold the gasket in position during assembly. Advantageously, the engagement portion of the gasket is engaged between the abutment surfaces of the respective joint parts. The engagement portion is conveniently a radially-extending circumferential flange portion of the gasket. A gasket of this kind preferably has a further skirt portion which extends longitudinally of the pipes and is deformed during assembly of the joint to provide a seal between the confronting annular surfaces of the pipes. The skirt portion advantageously comprises a frusto-conical portion which tapers inwardly in the direction away from the open end of its respective pipe and a bulbous terminal portion at the inner end of the gasket. Preferably, the skirt portion defines an annular cavity between itself and one of the confronting annular surfaces, into which cavity the gasket is deformed upon assembly of the pipe joint.

As mentioned previously, the pipes can be formed from any suitable material: ductile or spheroidal graphite iron is however preferred.

Conveniently, the joint of the invention is formed between pipes which each have a spigot part at one end and a socket part at the other. The invention may however be put into effect by pipes having spigot parts and both ends and pipes having socket parts at both ends: such pipes are used alternately to form a pipeline. All these pipe varieties, and any other allowing the joint of the invention to be formed, are also provided by the present invention.

The pipe joint of the present invention, in use, will always be held under compression within the acceptable parameters of joint interface tolerance and pipe thrust pressure. The joint may be constructed also to compensate for pipe deflection or mis-alignment whilst always maintaining the sealing means operative.

The spigot and socket parts may be formed, for example, by casting or by machining operations.

It has been found that joints according to the invention can be formed within the wall thickness of pipes having a wall thickness of as low as 20 mm, it being possible to maintain this wall thickness over a range of outside diameters.

Embodiments of the invention will be now be described by way of example with reference to the drawings, in which:
Figure 1 is a longitudinal section through a first joint formed between the spigot and socket ends of respective pipes,
Figure 2 is a longitudinal section through portions of the parts of a second joint, the parts being shown separated, and
Figure 3 corresponds to Figure 2 but shows the assembled joint.

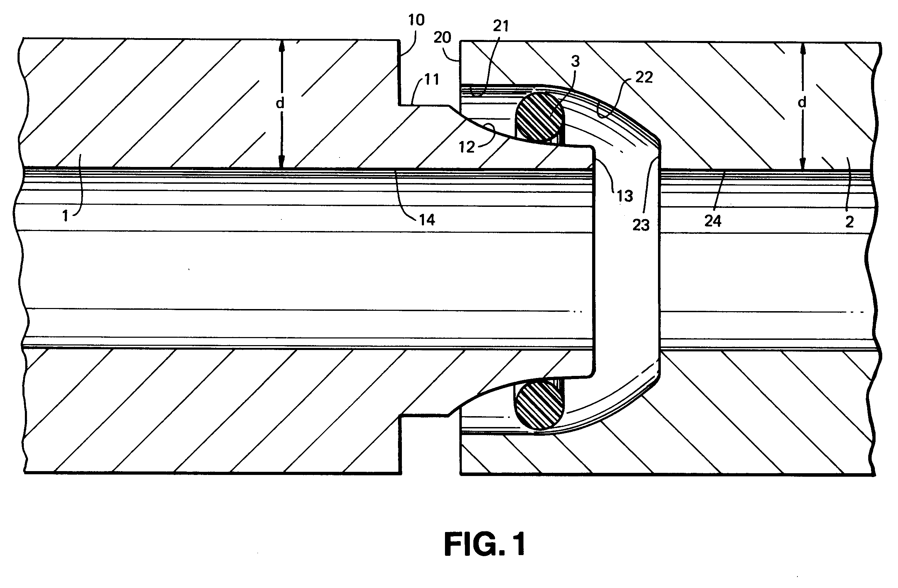

Figure 1 shows a pipe 1 having a spigot end received in the socket end of a pipe 2. The pipes 1, 2 are shown in a position in which the spigot end of the pipe 1 is less than fully received in the socket end of the pipe 2.

The spigot end of the pipe 1 comprises an external circumferential shoulder 10 which extends perpendicularly to the longitudinal axis of the pipe 1 and has a width approximately equal to half the wall thickness d of the pipe. The thickness d is, for example, 20 mm and the inside diameter of the pipe 300 mm, for example. At its inner end the circumferential shoulder 10 joins a circular cylindrical section 11 which extends parallel to the longitudinal axis of the pipe 1. The next portion of the spigot end is formed by a concave surface 12 which extends from the forward end of the cylindrical portion 11 to the end of the pipe which terminates in an annular end face 13 which is perpendicular to the longitudinal axis of the pipe 1.

The socket end of the pipe 2 has a circumferential end face 20 which is perpendicular to the pipe axis and has a width approximately one-third of the wall thickness d of the pipe 2. The end face 20 meets at its inner end with a circular cylindrical longitudinal portion 21 which is somewhat greater in length than the cylindrical portion 11 of the spigot end of the pipe 1. The portion 21 joins at its inner end with a concave portion 22 which meets at its inner end with an internal circumferential shoulder 23 which is perpendicular to the pipe axis.

The spigot and socket ends of the pipes are dimensioned so that, in the assembled condition of the pipe joint, the surfaces 10, 20 and 13, 23 abut each other to allow longitudinal thrust to be transferred from one pipe to the other.

The joint formed between the pipes 1, 2 is sealed by an O-ring 3 which is located between the concave surfaces 12, 22 of the spigot and socket, respectively.

It will be noted that, in the assembled condition of the pipe joint, the O-ring 3 is in sealing contact with the concave surfaces 12, 22 and the inner walls 14, 24 of the pipes 1, 2 meet with no substantial discontinuity over the joint. The same also applies to the outer surfaces of the pipes 1, 2 which meet externally with no surface discontinuity.

In the assembled joint, the design of the joint interface ensures a positive seal over the tolerance range of the manufactured pipes 1, 2 and yet allows sufficient thrust face areas to maintain compressive stresses on the pipes below yield.

For use, the pipe 2 is lowered into a shaft dug for formation of a pipeline by the micro-tunnelling and pipe-jacking technique. The pipe 2 is then jacked into the tunnel formed by a tunnelling machine as described earlier in this specification. After insertion of the pipe 2 into the tunnel, the pipe 1 is lowered into the shaft, the O-ring put in place and the spigot end of the pipe 1 inserted in the socket end of the pipe 2. The pipe 1 can then be jacked into the pipe tunnel and in so doing will form the joint described above with the socket end of the pipe 2. During jacking of the pipe 1, the pipe 2 is pushed further into the tunnel formed by the tunnelling machine, the longitudinal thrust applied to the pipe 1 being transferred to the pipe 2 by contact between the abutment surfaces 10, 20 and 13, 23 of the respective pipes.

Further pipe lengths can be jacked into the tunnel following the pipe length 1, each pipe being joined to the following pipe by a spigot and socket joint as described above. This is continued until the pipe 2 reaches the next shaft.

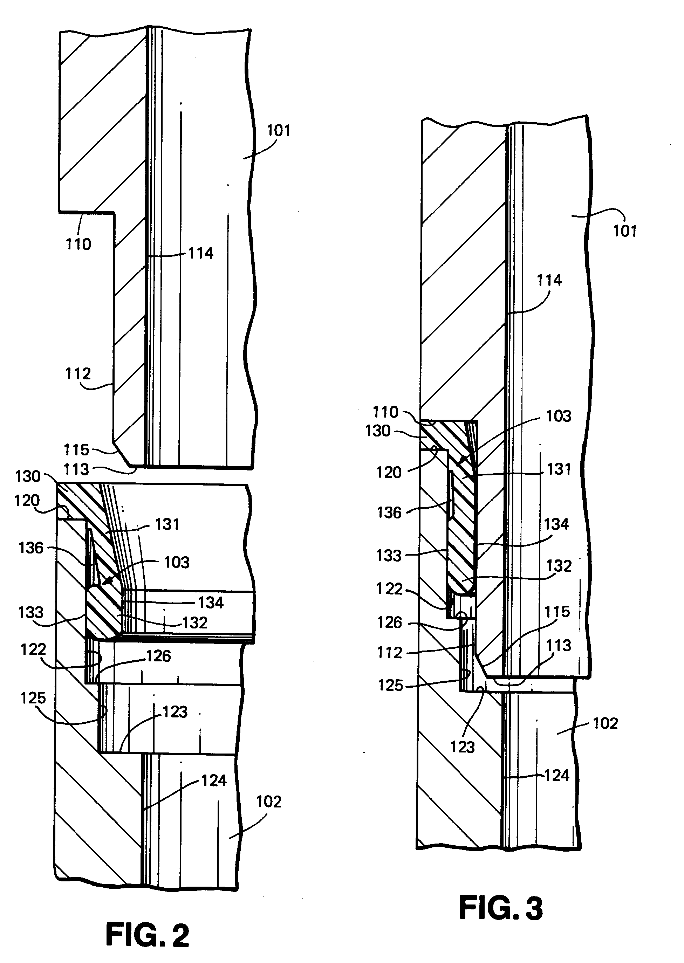

Figures 2 and 3 show a second pipe joint which is a modification of the joint shown in Figure 1. Parts of the second joint which correspond to parts of the first joint have been indicated by reference numerals increased by 100.

The second joint differs from the first mainly in the shape and function of its gasket 103, corresponding to the O-ring 3 of the first joint, and the shape of its annular surfaces 112, 122, 125 which correspond to the surfaces 11, 12, 21, 22 of the first joint.

The spigot end of the pipe 101 of the second joint has, between its circumferential shoulder 110 and its annular end face 113, a cylindrical portion 112 the axis of which coincides with the longitudinal axis of the pipe 101. A bevelled transition portion 115 joins the cylindrical portion 112 to the end face 113.

The socket end of the pipe 102 has, between its circumferential shoulder 123 and its end face 120, first and second cylindrical portions 122, 125 the axes of which coincide with the longitudinal axis of the pipe 102. A further circumferential shoulder 126 lies between the first and second cylindrical portions 122, 125, the diameter of the first portion being greater than that of the second.

The annular gasket 103 is formed from EPDM elastomer (a terpolymer of ethylene, propylene and a non-conjugated diene). Any other suitable material could be used. The gasket 103 has a first portion which forms an outwardly directed flange 130 A second portion 131 of the gasket 103 is generally frusto-conical in shape and extends into the pipe 102 to present an inclined inner surface which tapers inwardly away from the open end of the pipe. A third, bulbous portion 132 of the gasket 131 is of greater radial thickness than the second portion 131. The second and third gasket portions 131, 132 form a skirt portion of the gasket which extends into the pipe 102. The outer surface 133 of the bulbous portion 132 contacts the first cylindrical surface 122 of the pipe 102 whilst the inner surface 134 is cylindrical and faces the interior of the pipe 102. The shape of the second and third portions is such that a tapering annular cavity 136 is defined between the second cylindrical surface 122 of the pipe 102 and the gasket 103.

The assembled joint is shown in Figure 3, from which it will be seen that, upon insertion of the spigot end of the pipe 102 into the socket end of the pipe 101, the flange portion 130 of the gasket 103 becomes trapped between the end face 120 of the second pipe 102 and the shoulder 110 on the first pipe 101. The second and third portions 131, 132 of the gasket 103 are deformed as shown in Figure 3, to fill the annular space between the surfaces 112, 122 and provide the seal between the pipes 101, 102. This deformation leads to a reduction in the size of the annular cavity 136.

It will also be seen from Figure 3 that there is no contact in the assembled joint between the surfaces 113, 123: the thrust from one pipe to the other is transmitted through the surfaces 110, 120 and the gasket therebetween. During assembly of the final stage of assembly of the joint and the subsequent pipe-jacking operation, the trapping of the gasket flange portion 130 between the surfaces 110, 120 holds the gasket in its correct position for formation of a seal between the pipes 101,102.

As with the first joint, there are no surface discontinuities, either internal or external, across the assembled joint.

The pipes 101, 102 having the second joint are formed into a pipeline by micro-tunnelling and pipe-jacking in a way which is exactly parallel to that described above for the pipes 1, 2.

During jacking of the pipe lengths having either joint, the continuous outer surface across the joint allows unimpeded movement of the pipe lengths in the tunnel. In the finished pipeline the smooth inner surface provides for unimpeded fluid flow within the pipeline.

Although it is convenient to form each pipe length with a spigot at one end and a socket joint part at the other, it is also possible to put the invention into effect using pipes which have spigot parts at both ends in combination with pipes having socket parts at both of their ends.

## Claims

**1.** A pipe joint comprising a socket part, a spigot part receivable in the socket part to produce an assembled joint and means for forming a seal between the socket and spigot parts in the assembled joint, the spigot and the socket each being formed within the wall thickness of respective pipes, whereby the outer and inner pipe walls provide substantially continuous outer and inner surfaces across the assembled joint.

**2.** A pipe joint according to claim 1, in which the inner and outer cross-sections of the pipes are substantially constant across the assembled joint.

**3.** A pipe joint according to claim 1 or 2, in which each joint part has an abutment surface, the abutment surface of the socket part making direct or indirect contact with the abutment surface of the spigot part in the assembled joint in a way which allows longitudinal thrust to be transmitted from one pipe to the other.

**4.** A pipe joint according to claim 3, in which each abutment surface is formed by a continuous shoulder extending around the respective pipe, the shoulders preferably being perpendicular to the longitudinal axis of the respective pipes.

**5.** A pipe joint according to claim 3 or 4, in which each pipe has first and second abutment surfaces which are spaced longitudinally of the pipe.

**6.** A pipe joint according to claim 5, in which the sealing means is operative between portions of the pipes lying between the respective first and second abutment surfaces.

**7.** A pipe joint according to claim 3 or 4, in which each has a single abutment surface which is located outwardly of the sealing means.

**8.** A pipe joint according to any preceding claim, in which the sealing means is operative between confronting annular surfaces of the respective pipes, the surfaces extending generally longitudinally of the pipes and preferably being concave or cylindrical.

**9.** A pipe joint according to any of claims 6 to 8, in which the surfaces between which the sealing means acts extend continuously around the respective pipes.

**10.** A pipe joint according to any preceding claim, in which the sealing means is placed under compression by longitudinal thrust transmitted across the pipe joint from one pipe to another.

**11.** A pipe joint according to any preceding claim, in which the sealing means comprises a resiliently compressible O-ring.

**12** A pipe joint according to any of claims 3 to 10, in which the sealing means comprises a gasket having a portion for engagement between the spigot and socket parts during assembly of the joint, in order to hold the gasket in position during assembly.

**13.** A pipe joint according to claim 12, in which the engagement portion of the gasket is engaged between the abutment surfaces of the respective joint parts, the engagement portion preferably being a radially-extending circumferential flange portion of the gasket.

**14.** A pipe joint according to claim 12 or 13, in which the gasket has a further, skirt portion which extends longitudinally of the pipes and is deformed during assembly of the joint to provide a seal between the confronting annular surfaces of the pipes.

**15.** A pipe joint according to claim 14, in which the skirt portion of the gasket comprises a frusto-conical portion which tapers inwardly in the direction away from the open end of its respective pipe and a bulbous terminal portion at the inner end of the gasket.

**16.** A pipe joint according to claim 14 or 15, in which the skirt portion defines an annular cavity between itself and one of the confronting annular surfaces, into which cavity the gasket is deformed upon assembly of the pipe joint.

**17.** A pipe length having at one end a spigot part and the other end a socket part, the spigot and socket parts being suitable for formation of a joint according to any preceding claim.
